# FASCICULE DE BREVET EUROPEEN

(11) **EP 0 836 876 B1**
(45) Date de publication et mention de la délivrance du brevet: **12.01.2000**
(21) Numéro de dépôt: 97402326.9
(22) Date de dépôt: 03.10.1997
(51) Int. Cl.: B01D 21/00, B01D 21/24

(54) **Décanteur lamellaire pour le traitement de liquide chargé**
Lamellenabscheider zur Behandlung beladener Flüssigkeit
Lamellar clarifier for the treatment of loaded liquid

(30) Priorité: 18.10.1996 FR 9612702
(43) Date de publication de la demande: 22.04.1998
(73) Titulaire: Hydroconcept, 92800 Puteaux (Hauts-de-Seine) (FR)
(72) Inventeur: Bald, Jean-Louis, 92800 Puteaux (FR)
(74) Mandataire: Cabinet HERRBURGER

(56) Documents cités:
- DE-A- 4 130 515
- US-A- 4 514 303

## Description

La présente invention concerne un décanteur lamellaire pour le traitement de liquide chargé, comprenant :
- une cuve avec une entrée de liquide chargé et une sortie de liquide décanté équipée d'un chemin de décantation,
- ce chemin de décantation étant formé par un ensemble de plaques maintenues parallèles au moins dans leur position active entre lesquelles le liquide à décanter circule,
- ces plaques pouvant basculer entre une position active de décantation, inclinée par rapport à la direction verticale, et une position sensiblement verticale pour leur nettoyage,
- un moyen de commande faisant basculer les plaques de leur position active à leur position de nettoyage ou inversement.

De manière générale, pour le traitement de liquides chargés de matières polluantes (appelées de manière simplifiée et par convention 〈〈 particules 〉〉), l'un des principes utilisés est celui de la séparation gravimétrique. Les particules se déplacent dans le liquide sous l'effet de leur différence de densité avec celle de l'eau.

De manière très schématique, le rendement d'un décanteur est proportionnel à la surface développée de ses plaques.

En théorie, on aurait donc intérêt à subdiviser la hauteur du bassin ou de la cuve de décantation en tranches délimitées par des plaques horizontales sur lesquelles se déposeraient les particules. Cela multiplierait la surface de décantation du décanteur. Toutefois, une telle solution théorique n'est pas possible car les plaques doivent être nettoyées aussi en pratique en est-on arrivé à un compromis consistant à former un chemin de décantation constitué par un ensemble de plaques inclinées et parallèles de manière à former des passages entre lesquels circule le liquide à décanter.

Les plaques en position inclinée ont un rendement correspondant à la projection géométrique verticale de la plaque sur la cuve.

On arrive, même en position inclinée, à multiplier ainsi la surface active du décanteur par rapport à la surface du décanteur au sol.

La circulation du liquide à décanter se fait à partir de la base de la structure lamellaire pour remonter dans l'intervalle entre les lames et sortir par le haut. Cette circulation est à contre-courant du sens de dépôt des particules de densité supérieure à un.

Une partie des particules déposées sur les plaques glisse le long des plaques et tombe au fond de la cuve. Toutefois, il faut de temps à autre nettoyer les plaques et pour cela on les met dans une position pratiquement verticale. Les dépôts des plaques glissent alors le long des plaques et tombent au fond de la cuve.

La position des plaques inclinées est une position de compromis entre l'efficacité de la décantation et la possibilité ou l'efficacité du nettoyage.

Les décanteurs connus (voir US-A-4314303) comportent comme moyen de commande de basculement un treuil actionné manuellement ou par un moteur.

Un tel décanteur présente l'inconvénient de nécessiter une intervention humaine au moment où l'on veut nettoyer les plaques. Or, un décanteur ne fonctionne pas toujours de manière régulière. Cela nécessite des interventions elles aussi irrégulières pour commander la mise en position de nettoyage des plaques. Celles-ci peuvent s'incruster de boues séchées rendant plus compliquée leur élimination ultérieure.

La présente invention a pour but d'améliorer l'efficacité d'un décanteur lamellaire en perfectionnant son nettoyage et en assurant celui-ci, automatiquement, chaque fois que le décanteur est vidé, pour en outre faciliter l'évacuation des boues déposées au fond du décanteur.

A cet effet, l'invention concerne un décanteur du type défini ci-dessus, caractérisé en ce que le moyen de commande de basculement est un moyen de commande par flottation, mis en oeuvre par la montée et la descente du niveau de liquide dans la cuve.

Le passage des plaques en position active se fait automatiquement dès que l'eau monte dans le décanteur. Inversement, lors du processus de vidange de la cuve, l'eau descend dans la cuve si bien que les plaques descendent progressivement pour venir en position verticale.

Dans cette position, les matières décantées glissent le long des plaques pour tomber au fond de la cuve.

Cela permet, lorsque l'installation est combinée à un dispositif de nettoyage du fond du cuve, procédant par exemple par un clapet de chasse libérant un flot de rinçage, de nettoyer le fond de la cuve des dépôts issus de décantation.

Suivant d'autres caractéristiques particulièrement avantageuses :
- le moyen de flottation est constitué par les plaques elles-mêmes ayant une densité inférieure à celle du liquide à traiter,
- le moyen de flottation est formé par des flotteurs équipant au moins certaines des plaques,
- des flotteurs sont associés à l'ensemble des plaques,
- le décanteur comprend en outre un dispositif de nettoyage situé au fond du compartiment de décantation de la cuve du décanteur,
- le décanteur comprend une butée réglable contre laquelle s'appuie l'ensemble des plaques qui en définit l'inclinaison pour la position active de décantation,
- les plaques sont en matière synthétique ou tout autre matière de densité inférieure à 1.

La présente invention sera décrite ci-après de manière plus détaillée à l'aide des dessins annexés dans lesquels :
- la figure 1 est une vue en coupe schématique d'un décanteur selon l'invention, ainsi que ses différents équipements accessoires,
- la figure 2 montre le décanteur de la figure 1 en phase de remplissage,
- la figure 3 montre le décanteur en position de fonctionnement,
- la figure 4 montre le décanteur en position de nettoyage des plaques,
- la figure 5 montre le décanteur en position de nettoyage du fond de la cuve,
- la figure 6 montre schématiquement en vue en perspective un ensemble de plaques selon un premier mode de réalisation,
- la figure 7 montre un second mode de réalisation de plaques selon l'invention,
- la figure 8 montre un troisième mode de réalisation de plaques selon l'invention.

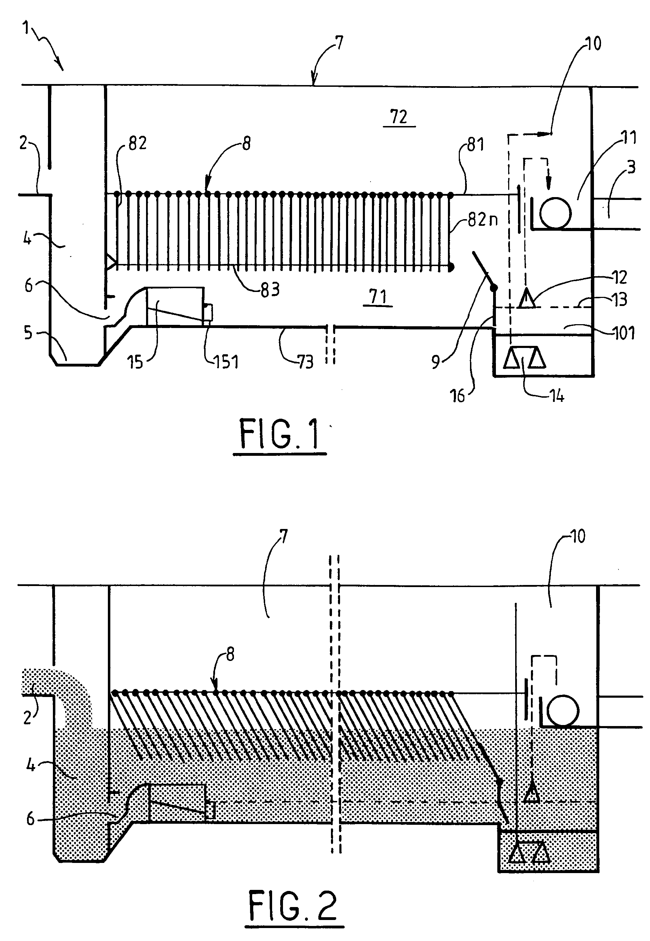

Selon la figure 1, l'invention concerne un décanteur lamellaire destiné à faire décanter des liquides chargés de matières solides en suspension, par séparation gravimétrique. En général, les liquides chargés de particules sont des eaux de pluie.

Le décanteur se compose d'un bassin ou d'une cuve 1 avec une entrée de liquide chargé 2 et une sortie de liquide décanté 3. En entrée, il y a par exemple une chambre de régulation de débit non représentée. Le liquide arrive ensuite dans une chambre de dessablement 4 dont le fond 5 sert à recueillir les particules lourdes telles que le sable ou des particules analogues.

Près du fond de la chambre de dessablement 4, il y a une sortie 6 de liquide. Cette sortie 6 débouche dans la partie inférieure du compartiment décanteur 7. Ce compartiment est équipé d'un chemin de décantation formé par une structure lamellaire comprenant des supports 81 auxquels sont suspendues des plaques 82 maintenues en position écartée, parallèle, par des entretoises réglables 83.

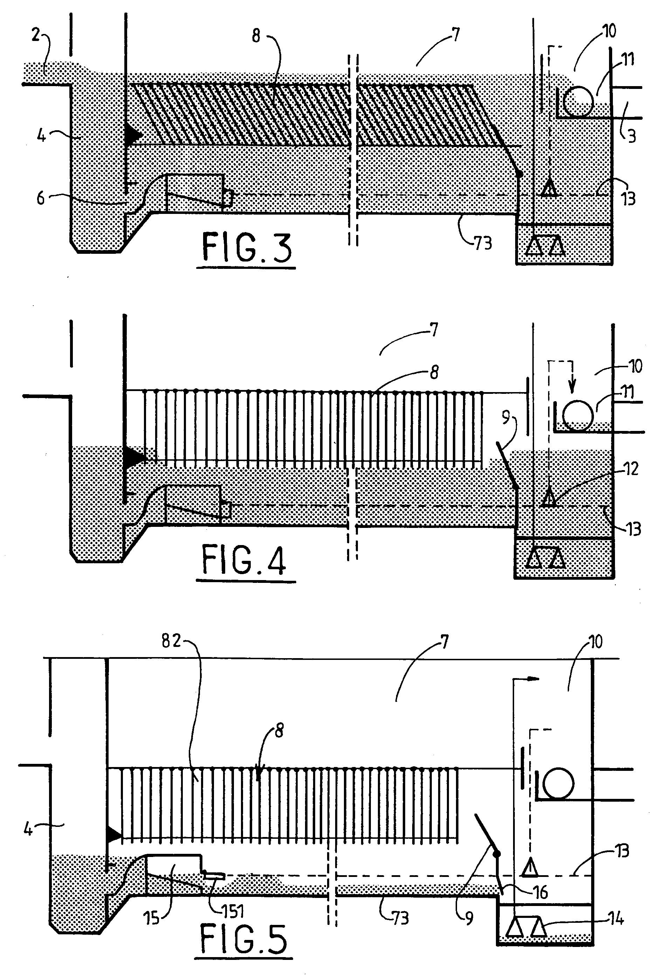

Ces plaques 82 peuvent basculer entre une position sensiblement verticale, celle représentée à la figure 1, et une position inclinée comme celle des figures 2, 3.

Le compartiment de décanteur 7 est muni en sortie d'une butée 9, réglable, qui définit l'inclinaison maximale des plaques 82 de l'ensemble lamellaire 8. Cette butée 9 forme en même temps un moyen d'étanchéité relative qui, lorsque la dernière plaque 82ₙ est appliquée contre elle, sépare le compartiment de décanteur 7 en une zone amont 71 et une zone aval 72 du chemin de décantation constitué par l'ensemble lamellaire 8.

Le liquide est ainsi forcé de passer entre les plaques, maintenues parallèles, pour remonter entre celles-ci pendant que les particules se déposent sur les plaques.

Puis, le liquide passe par-dessus le bord supérieur des plaques 82 pour arriver dans le compartiment de sortie 10, en aval de la zone 72. Ce compartiment de sortie 10 est équipé d'un déversoir et d'une goulotte d'évacuation 11 des eaux décantées ; celles-ci y arrivent directement, lorsque le décanteur est alimenté puisque le niveau de cette goulotte est sous le niveau de la goulotte d'entrée 2. Une pompe 12 évacue le reste des eaux décantées à la fin d'une phase de décantage, par la partie de liquide sous le niveau de la goulotte 11 mais au-dessus d'une certaine hauteur 13 par rapport au fond du compartiment pour ne pas risquer d'entraîner des boues dans la sortie de liquide décanté.

Il est également prévu une pompe 14 d'évacuation des eaux chargées et des eaux de rinçage. Cette pompe évacue ces eaux vers une sortie séparée.

Selon l'invention, le fond 73 du compartiment de décantation 7 est équipé d'un moyen de rinçage pouvant éventuellement être constitué par un bac de retenue 15 qui se remplit en même temps que le compartiment de décantation. Ce bac de retenue 15 s'étend pratiquement sur toute la largeur du fond 73 du compartiment de décantation 7 ; il est muni en sortie, d'un clapet de retenue 151. Ce clapet 151 est ouvert à la fin d'une phase de décantation, lorsque l'eau du compartiment de décantation 7 est évacué et que les boues et dépôts sont tombés ou ont glissé des plaques 82 sur le fond 73 ; il libère un flot de rinçage nettoyant le fond 73 de ses boues pour les évacuer dans le compartiment à boues 101 au fond du compartiment de sortie 10.

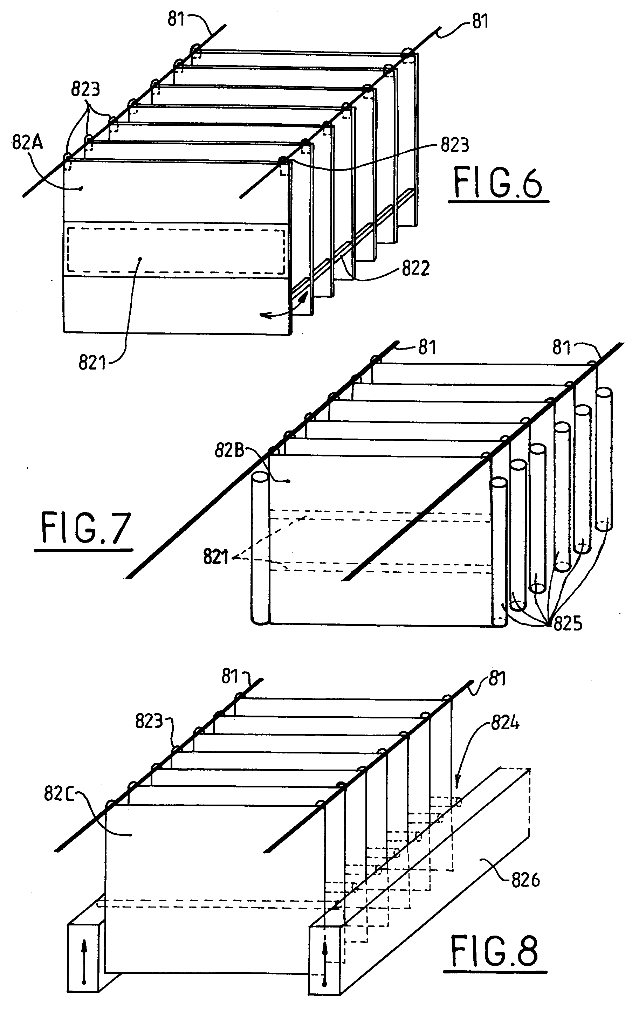

Selon l'invention, le mouvement des plaques 82 de la structure lamellaire 8 entre la position de nettoyage, sensiblement verticale et la position active ou position inclinée, est commandé de manière générale par un moyen de flottation mis en oeuvre par la montée et la descente du niveau de liquide dans la cuve ou dans le compartiment de décantation 7. Ce moyen de commande de basculement par flottation peut être réalisé de différentes manières dont trois modes de réalisation particuliers sont représentés schématiquement aux figures 6, 7, 8.

Selon un premier mode de réalisation (figure 6), les plaques de décantation 82A sont des plaques de densité inférieure à 1 pouvant éventuellement être en chlorure de polyvinyle, éventuellement munies d'un support rigide 821 et maintenues écartées en position parallèle par des entretoises réglables 822 chaque fois entre les plaques près de leur extrémité inférieure.

Les plaques 82A sont elles-mêmes portées par le rail de support 82 qui est par exemple un câble en inox tendu dans le compartiment 7, auquel les plaques 82A sont accrochées par des oeillets 823 prévus à leurs coins supérieurs.

Le moyen de flottation est constitué par l'ensemble des plaques 82A et leur renforcement 821 dont la densité globale est inférieure à celle du liquide à décanter.

Les plaques 82A sont donc soumises par le liquide à un effort vertical qui les fait pivoter et basculer en position inclinée. Les plaques s'appuient les unes sur les autres en restant parallèles grâce aux entretoises réglables non représentées.

La dernière plaque s'appuie contre la butée réglable 9 qui définit l'inclinaison des plaques en position active de décantation.

Inversement, lorsque le niveau de liquide descend dans le compartiment, les plaques descendent et se mettent en position verticale.

Le second mode de réalisation du moyen de commande de basculement par flottation selon la figure 7 est constitué par des flotteurs 825 équipant les plaques 82B, par exemple le long des côtés des plaques.

Ces plaques peuvent également être munies de moyen de renforcement ou de moyens de rigidification 821.

Les flotteurs 825 sont choisis pour que les plaques 82B qu'elles équipent flottent dans le liquide à décanter.

Par ailleurs, les plaques 82B sont également accrochées au support 81 qui, comme dans l'exemple précédent, peuvent être des câbles en inox.

La commande du basculement des plaques 82B se fait comme dans le premier exemple selon le principe général de la présente invention. Il est à remarquer que les flotteurs équipant les plaques peuvent servir d'entretoises garantissant le parallélisme des plaques dans les deux positions de basculement.

Dans la troisième variante de réalisation représentée à la figure 8, les plaques 82C ne flottent pas elles-mêmes. Elles sont équipées de deux flotteurs latéraux 826, occupant toute la longueur de la structure lamellaire et auxquels sont reliées les plaques 82C par des barres d'appui 824 assurant en même temps le maintien des lames parallèles. Ces barres 824 peuvent être reliées aux flotteurs 826.

La mise en oeuvre du décanteur selon l'invention sera décrite ci-après à l'aide des schémas des figures 3 à 5.

Selon la figure 2, l'eau commence par entrer dans le décanteur par l'arrivée 2. Elle passe dans la chambre de dessablement ; le sable se dépose au fond de la chambre et le liquide chargé de particules passe dans le compartiment de décantation. Dans ce compartiment, le niveau du liquide monte et soulève par effet de flottation les plaques 82 de la structure lamellaire 8 jusqu'à ce que l'ensemble de la structure lamellaire soit en appui contre la butée 9.

Les plaques 82 sont ainsi en position active. Elles sont parallèles et définissent entre elles des passages pour le liquide.

Selon la figure 3, le liquide monte alors dans la structure lamellaire et déborde par-dessus celle-ci comme l'indiquent les flèches, pour passer dans la zone aval 72 et dans le compartiment de sortie 10. Dans ce compartiment, l'eau décantée passe directement dans le déversoir 11 pour être évacuée par le canal de sortie 3.

Le décanteur continue de fonctionner dans cette situation. Les particules se déposent sur les plaques et glissent le long de celles-ci pour tomber au fond du compartiment 7.

Selon la figure 4, lorsque l'arrivée de liquide à décanter s'arrête, la cuve se vide progressivement, la pompe 12 pompant le liquide dans le déversoir 11 pour évacuer d'abord les eaux décantées vers le milieu naturel.

En fait, la séparation entre le compartiment de sortie 10 et le compartiment de décantation 7 n'étant pas parfaitement étanche, le niveau entre les deux compartiments diminue progressivement. Les plaques 82 de la structure lamellaire 8 descendent alors sous l'effet de la gravité et se mettent en position verticale.

Dans cette position, les boues déposées sur les plaques continuent de glisser et de tomber au fond du compartiment de décantation.

Enfin, lorsque le liquide décanté est pratiquement évacué jusqu'à la hauteur 13, après une éventuelle période de temporisation, la pompe 14 vide l'eau de la cuve 10 et celle restant dans la cuve 7 par déverse dans la cuve 10, à travers l'ouverture du battant 16 qui s'ouvre naturellement sous la poussée du liquide. Puis le battant 16 se rabat verticalement sous l'effet de son poids, lorsque la cuve 10 est vidée par la pompe 14. La phase de nettoyage du fond 73 de la cuve 7 peut alors avoir lieu selon le dispositif prévu.

Dans le cas de nettoyage par un dispositif à réservoir de chasse 15, le clapet de chasse 151 s'ouvre automatiquement et libère un flot de rinçage qui entraîne les matières polluantes déposées sur le fond 73 vers la bâche prévue dans le fond de la cuve 10.

La pompe 14 se réenclenche et évacue les eaux chargées vers le réseau d'eaux usées, voire même vers tout autre dispositif de l'exploitant comme par exemple : cuve de stockage, camions citernes, etc.

## Revendications

1. Décanteur lamellaire pour le traitement de liquide chargé, comprenant
- une cuve (1) avec une entrée de liquide chargé (2) et une sortie de liquide décanté (3) équipée d'un chemin de décantation (7, 8),
- ce chemin de décantation étant formé par un ensemble de plaques (8, 82) maintenues parallèles au moins dans leur position active entre lesquelles le liquide à décanter circule,
- ces plaques (82) pouvant basculer entre une position active de décantation, inclinée par rapport à la direction verticale, et une position sensiblement verticale pour leur nettoyage,
- un moyen de commande faisant basculer les plaques (82) de leur position active à leur position de nettoyage ou inversement,
caractérisé en ce que
le moyen de commande de basculement est un moyen de commande par flottation, mis en oeuvre par la montée et la descente du niveau de liquide dans la cuve (7).

2. Décanteur selon la revendication 1,
caractérisé en ce que
le moyen de flottation est constitué par les plaques (82A) elles-mêmes ayant une densité inférieure à celle du liquide à traiter.

3. Décanteur selon la revendication 1,
caractérisé en ce que
le moyen de flottation est formé par des flotteurs (825) équipant au moins certaines des plaques (82B).

4. Décanteur selon la revendication 3,
caractérisé en ce que
des flotteurs (826) sont associés à l'ensemble des plaques (82C).

5. Décanteur selon la revendication 1,
caractérisé en ce que
il comprend en outre un dispositif de nettoyage (15), ce dispositif pouvant être à vague déferlante, situé au fond (73) du compartiment de décantage (7) de la cuve (1) du décanteur.

6. Décanteur selon la revendication 1,
caractérisé en ce que
il comprend une butée réglable (9) contre laquelle s'appuie l'ensemble (8) des plaques (82) qui en définit l'inclinaison pour la position active de décantation.

7. Décanteur selon la revendication 1,
caractérisé en ce que
les plaques (82) sont en matière synthétique de densité inférieure à 1 pouvant éventuellement être en chlorure de polyvinyle.

8. Décanteur selon la revendication 1,
caractérisé en ce que
l'écartement des plaques est variable grâce à des entretoises de longueur réglable.

## Claims

1. Lamellar clarifier for the treatment of loaded liquid, comprising
- a tank (1) with an inlet for loaded liquid (2) and an outlet for clarified liquid (3), fitted with a clarification path (7, 8),
- this clarification path being formed by a set of plates (8, 82) kept parallel at least in their active position, between which the liquid to be clarified circulates,
- these plates (82) being capable of swinging between an active clarification position, inclined with respect to the vertical direction, and an approximately vertical position for their cleaning,
- a control means which makes the plates (82) swing from their active position to their cleaning or inversion position,
characterised in that
the means of controlling the swinging is a means of control by flotation, operated by the rise and fall of the liquid level in the tank (7).

2. Clarifier according to Claim 1,
characterised in that
the flotation means consists of the plates (82A) which themselves have a density lower than that of the liquid to be treated.

3. Clarifier according to Claim 1,
characterised in that
the flotation means is formed by floaters (825) fitted to at least some of the plates (82B).

4. Clarifier according to Claim 3,
characterised in that
floaters (826) are associated with the set of plates (82C).

5. Clarifier according to Claim 1,
characterised in that
it additionally comprises a cleaning device (15), this device possibly being of the breaking wave type, located at the bottom (73) of the clarification compartment (7) of the tank (1) of the clarifier.

6. Clarifier according to Claim 1,
characterised in that
it comprises an adjustable stop (9) against which the set (8) of plates (82) bears and which determines their inclination for the active clarification position.

7. Clarifier according to Claim 1,
characterised in that
the plates (82) are made from synthetic material having a density of less than 1, possibly polyvinyl chloride.

8. Clarifier according to Claim 1,
characterised in that
the spacing of the plates can be varied by means of spacers of adjustable length.

## Patentansprüche

1. Lamellenabscheider für das Behandeln einer belasteten Flüssigkeit, bestehend aus
- einer Wanne (1) mit einem Einlass (2) für die belastete Flüssigkeit und einem Auslass (3) für die geklärte Flüssigkeit, ausgerüstet mit einer Klärstrecke (7, 8), wobei
- diese Klärstrecke aus einer Ansammlung von Platten (8, 82), die zumindest in ihrer Arbeitslage parallel zueinander angeordnet sind, gebildet wird, zwischen denen die zu klärende Flüssigkeit zirkuliert, wobei
- diese Platten (82) zwischen einer aktiven Klärlage, die schräg bezüglich der senkrechten Richtung ist, und einer absolut senkrechten Lage für ihre Säuberung kippen können, und
- einer Steuereinrichtung, welche die Platten (82) aus ihrer Arbeitslage in ihre Säuberungslage kippen lässt oder umgekehrt,
dadurch gekennzeichnet,
dass die Steuereinrichtung für das Kippen eine Steuereinrichtung durch Aufschwimmen ist, die durch das Steigen und Fallen des Flüssigkeitsspiegels in der Wanne (7) in Tätigkeit versetzt wird.

2. Abscheider nach Anspruch 1, dadurch gekennzeichnet, dass das Aufschwimmelement aus den Platten (82 A) besteht, die selbst eine geringere Dichte, als die der zu behandelnden Flüssigkeit besitzen.

3. Abscheider nach Anspruch 1, dadurch gekennzeichnet, dass das Aufschwimmelement aus Schwimmern (825) besteht, mit denen zumindest gewisse Platten (82 B) ausgerüstet sind.

4. Abscheider nach Anspruch 3, dadurch gekennzeichnet, dass Schwimmer (826) mit der Ansammlung der Platten (82 C) verbunden sind.

5. Abscheider nach Anspruch 1, dadurch gekennzeichnet, dass er desweiteren eine Säuberungsanordnung (15) aufweist, wobei diese Anordnung ein Wellenschwall am Boden (73) der Klärkammer (7) der Wanne (1) des Abscheiders sein kann.

6. Abscheider nach Anspruch 1, dadurch gekennzeichnet, dass er einen verstellbaren Anschlag (9) aufweist, gegen den die Ansammlung (8) der Platten (82) anschlägt, der dadurch die Neigung für die aktive Klärlage festlegt.

7. Abscheider nach Anspruch 1, dadurch gekennzeichnet, dass die Platten (82) aus synthetischem Material mit einer geringeren Dichte als 1 hergestellt sind, wobei sie gegebenenfalls aus Polyvinylchlorid hergestellt sein können.

8. Abscheider nach Anspruch 1, dadurch gekennzeichnet, dass der Abstand der Platten dank in der Länge regulierbarer Abstandhalter veränderbar ist.
